# EUROPÄISCHE PATENTSCHRIFT

(11) **EP 3 483 472 B1**
(45) Veröffentlichungstag und Bekanntmachung des Hinweises auf die Patenterteilung: **08.09.2021**
(21) Anmeldenummer: 18186438.0
(22) Anmeldetag: 31.07.2018
(51) Int. Cl.: F16G 1/08, B65G 43/02, F16G 1/28, F16G 5/06, F16G 5/20

(54) **RIEMEN AUS EINEM FLEXIBLEN MATERIAL MIT EINER AN SEINER RADIALEN AUSSENSEITE ANGEORDNETEN ELEKTRONIK**
BELT MADE OF OF A FLEXIBLE MATERIAL WITH ELECTRONICS ARRANGED RADIALLY ON ITS OUTER SIDE
COURROIE D'UN MATÉRIAU FLEXIBLE DOTÉE D'UNE ÉLECTRONIQUE AGENCÉE SUR SA FACE EXTÉRIEURE RADIALE

(30) Priorität: 10.11.2017 DE 102017220018
(43) Veröffentlichungstag der Anmeldung: 15.05.2019
(73) Patentinhaber: ContiTech Antriebssysteme GmbH, 30165 Hannover (DE)
(72) Erfinder: Fiss, Tim, 30519 Hannover (DE); Lüker, Svenja, 30161 Hannover (DE); Mahnken, Claus-Lüder, 27367 Ahausen (DE); Rosen, Simon, 30161 Hannover (DE); Sattler, Heiko, 30900 Wedemark (DE); Reck, Siegfried, 31582 Nienburg/ Weser (DE)
(74) Vertreter: Continental Corporation

(56) Entgegenhaltungen:
- DE-A1-102007 030 142
- DE-U1-202016 008 121

## Beschreibung

Die Erfindung betrifft einen Riemen aus einem flexiblen Material, an dem eine Elektronik angeordnet ist, mittels welcher wenigstens einer Zustandsgröße des Riemens messbar sowie drahtlos an eine entfernt angeordnete Empfangseinheit weiterleitbar ist. DE 10 2007 030 142 A1 zeigt z.B. einen Riemen nach dem Obergriff des Anspruchs 1.

Kapitalintensive Agrarmaschinen und stationäre Industrieanlagen erfordern eine sorgfältige und Schäden vorbeugende Instandhaltung derselben. Daher werden die dort genutzten Antriebsriemen derzeit nach vergleichsweise kurzer Nutzungsdauer ausgewechselt, um die Gefahr von Schäden an den Maschinen oder Anlagen und somit kostspielige Stillstandzeiten zu verringern. Es wurde bereits mehrfach vorgeschlagen, derartige Antriebsriemen mit einer Elektronik auszustatten, welche mit einem entfernt angeordneten Überwachungssystem drahtlos in Verbindung steht. Die von dieser Elektronik sensorisch erfassten Zustandsdaten des Antriebsriemens werden dazu genutzt, eine riemenzustandsabhängige Wartung der Maschinen oder Anlagen vorzusehen, wodurch im Ergebnis die Anzahl derer Stillstandzeiten aus Wartungsgründen reduziert wird.

So ist aus der DE 10 2009 003 732 A1 ein flexibler Antriebsriemen bekannt, in dessen elastomeren Material eine Tasche ausgebildet ist, in der ein Sensor sowie ein damit elektrisch verbundenes flexibles Piezoelement angeordnet sind. Das flexible Piezoelement erzeugt aufgrund von Riemenbewegungen durch zeitliche Änderung seines Biegeradius elektrische Energieportionen, welche zur Energieversorgung des Sensors dienen. Gemäß einer dortigen ersten Ausführungsform ist das Piezoelement durch Einvulkanisieren fest und unlösbar mit dem Riemenmaterial verbunden. Gemäß einer zweiten Ausführungsform ist vorgesehen, dass der Antriebsriemen eine Tasche aufweist, in die das flexible Piezoelement nach der Vulkanisation des Riemens derart mit dem Sensor und elektrischen Verbindungselementen einsteckbar ist, dass das Piezoelement an die Bewegungen des Riemens im Betrieb angekoppelt ist. Durch die feste Verbindung des Piezoelements mit dem Riemenmaterial wird dieses bei einer betriebsbedingten Bewegung des Riemens zur Energieerzeugung angeregt. Die in dem Material des Riemens ausgebildete Tasche ist nach einem Einstecken des Sensors und des Piezoelements irreversibel verschließbar.

Als nachteilig wird beurteilt, dass das Einvulkanisieren der Elektronik wegen der bis zu 180°C betragenden Vulkanisationstemperatur und Drücke bis 1,5 MPa diese schädigen kann. Auch das Erzeugen einer Tasche im Material des Antriebsriemens ist unvorteilhaft, weil dadurch die Riemenstruktur geschädigt oder zumindest inhomogen wird. Die letztgenannten Nachteile weist nach diesseitiger Beurteilung auch der aus der DE 10 2010 002 551 A1 bekannte Antriebsriemen auf, bei dem eine Elektronik mit einem RFID-Transponder in das Material des Antriebsriemens einvulkanisiert ist.

Zudem birgt die übliche Herstellung von Riemenwickel auf einer Riemenaufbautrommel die Gefahr, dass nach dem Vulkanisieren des Wickels bei der daran anschließenden Vereinzelung desselben in separate Antriebsriemen sich die dort eingebaute Elektronik nicht exakt lokalisieren lässt, in dessen Folge die Elektronik durch die zur Vereinzelung notwendigen Schnitte zerstört wird. Dies kann insbesondere dann geschehen, wenn beispielsweise zur Ausbildung von Riemenzähnen Fließprozesse im Wickelmaterial stattgefunden haben und dadurch eine zuvor bekannte Position der Elektronik verändert ist. Zudem kann eine Schädigung der einvulkanisierten Elektronik bei einem Umkrempeln der aus dem Wickel vereinzelten Riemen erfolgen.

Außerdem sind in Antriebsriemen einvulkanisierte Elektroniken im Betrieb während des Umlaufs des Antriebsriemens an Riemenscheiben oder Variatorscheiben sehr häufigen Dehnungen und Stauchungen ausgesetzt. Dies kann zu einem nachteiligen Verlust des mechanischen Kontaktes zwischen dem Material des Antriebsreimens und dem Material der Elektronik führen, sofern die Elektronik wie üblich eine nur geringe Dehnfähigkeit aufweist.

Vor diesem Hintergrund lag der Erfindung die Aufgabe zugrunde, einen Riemen, vorzugsweise einen endlosen Antriebsriemen vorzustellen, der zwar mit einer Elektronik zur Erfassung von Zustandsgrößen des Riemens ausgestattet ist, jedoch nicht die beschriebenen Nachteile aufweist. Daher soll die an diesem Riemen angeordnet Elektronik nicht wie konventionell in diesen einvulkanisiert sein, und die Elektronik soll bei der betriebsbedingten Bewegung des Riemens keinen Dehnungen und/oder Stauchungen ausgesetzt sein.

Die Lösung dieser Aufgabe wird mit einem Riemen erreicht, welcher die Merkmale des Anspruchs 1 aufweist. Vorteilhafte Weiterbildungen sind in den abhängigen Ansprüchen definiert.

Demnach betrifft die Erfindung einen Riemen aus einem flexiblen Material, an dem eine Elektronik angeordnet ist, mittels welcher wenigstens einer Zustandsgröße des Riemens messbar sowie drahtlos an eine entfernt angeordnete Empfangseinheit weiterleitbar ist. Zur Lösung der gestellten Aufgabe ist bei diesem Riemen vorgesehen, dass an der radialen Außenseite des Riemens eine Tasche befestigt ist, und dass die Elektronik in einem Aufnahmeraum dieser Tasche angeordnet ist.

Das genannte flexible Material des Riemens ist beispielsweise ein Gummi oder ein Polyurethan-Werkstoff.

Gemäß der Erfindung ist bei diesem Riemen die Elektronik zur Messung von wenigstens einer Zustandsgröße desselben nicht wie konventionell in den Riemen einvulkanisiert oder in eine im Riemen ausgebildete Tasche eingesteckt, sondern es ist an der radialen Außenseite des Riemens eine Tasche befestigt, in welcher die Elektronik ortsfest eingesetzt ist. Die Anordnung der Tasche am Riemenrücken hat den großen Vorteil, dass die Elektronik nach der vollständigen Herstellung des Riemens an diesem angeordnet werden kann, wodurch die eingangs genannten Nachteile hinsichtlich hoher Temperaturen und Drücke beim Vulkanisieren sowie Probleme beim Zerschneiden eines Wickels in einzelne Riemen und deren Umkrempelung vermieden werden. Durch das Anordnen der Elektronik nach der vollständigen Herstellung des Riemens kann diese sehr genau an einem für die vorgesehenen Messungen geeigneten Ort befestigt werden, und es kann davon ausgegangen werden, dass die Elektronik beziehungsweise deren Sensor auch an dem ausgewählten Ort angeordnet bleibt. Zudem kann die Herstellung des Riemens selbst unkompliziert nach den konventionellen Herstellverfahren erfolgen.

Ein weiterer Vorteil wird darin gesehen, dass wegen der Bestückung des Riemens mit der Elektronik erst nach dessen vollständigen Fertigstellung die Elektronik entsprechend individueller Kundenwünsche an der radialen Außenseite des Riemens angebracht werden kann. Dadurch hat der Anwender zum Beispiel die Möglichkeit, die Messstelle oder mehrere Messstellen an seinem Riemen selbst festzulegen und die Bestückung des Riemens mit der Elektronik gegebenenfalls selbst vorzunehmen.

Außerdem weist ein gemäß der Erfindung mit der erwähnten Tasche und der darin befestigten Elektronik ausgestatteter Riemen keine Beeinträchtigungen seiner mechanischen Festigkeit oder Dauerbelastbarkeit auf, denn an dessen inneren Struktur wurde keine Änderung vorgenommen, um dort wie beim Stand der Technik eine Elektronik unterzubringen. Hierdurch können Kundenfreigaben hinsichtlich bisheriger, elektronikloser Riemen ohne oder mit nur geringen Änderungen übernommen werden.

Schließlich kann ein bisher ohne Elektronik versehener Riemen zu Forschungs- oder Versuchszwecken mit der erfindungsgemäßen Tasche samt darin angeordneter Elektronik bestückt werden, um etwa dessen Betriebsverhalten und/oder das Betriebsverhalten benachbarter Vorrichtungselemente in unterschiedlichen Vorrichtungen und Anlagen untersuchen zu können.

Gemäß einer ersten vorteilhaften Weiterbildung der Erfindung ist bei diesem Riemen vorgesehen, dass die Elektronik auf einem Elektronikträger angeordnet ist, welcher mit dem riemenseitigen Boden der Tasche vergleichsweise lose, jedoch verschiebefest verbunden ist. Durch diese Anordnung des Elektronikträgers am Boden der Tasche ist gewährleistet, dass der Elektronikträger bei einer betriebsbedingten Längung oder Stauchungen des Riemens und der Tasche nicht zu einer nachteiligen Hin- und Her-Bewegung gezwungen wird.

Hierbei kann insbesondere vorgesehen sein, dass der Elektronikträger mit dem Boden der Tasche derartig verbunden ist, dass der Elektronikträger bei einer elastischen Geometrieänderung des Riemens und/oder der Tasche seine Abmessungen unverändert beibehält. Eine solche Geometrieänderung des Elektronikträgers könnte nämlich zu einer Beschädigung desselben und/oder der darauf angeordneten elektronischen Komponenten führen. Die von dem Verbindungsmittel eingenommene Fläche ist dabei sehr viel kleiner als die zum Boden der Tasche weisende Fläche des Elektronikträgers.

Eine optimal gestaltete Verbindung zwischen dem Elektronikträger und dem Boden der Tasche kann mittels einer linienartigen, fleckförmigen oder punktförmigen Verbindung realisiert sein. Diese Verbindung kann mittels einer Verklebung mit einem dafür geeigneten Klebstoff oder mittels einer Kaltvulkanisation durchgeführt sein. Eine andere Befestigungsvariante kann darin bestehen, den Elektronikträger am Boden der Tasche festzuschrauben.

Um die Tasche selbst mit dem Riemen unverlierbar zu verbinden kann vorgesehen sein, dass die Riemenseite der Tasche und die radiale Außenseite des Riemens mittels eines Klebstoffs miteinander verbunden sind. Es kann aber auch vorgesehen sein, dass die Riemenseite der Tasche und die radiale Außenseite des Riemens in einem Vulkanisationsbereich mittels einer Kaltvulkanisation miteinander verbunden sind.

Zusätzlich oder alternativ zu den beiden zuvor genannten Verbindungstechniken kann vorgesehen sein, dass die Tasche und der Riemen miteinander vernäht sind, wobei der wenigstens eine Nähfaden mit einem Gewebe zusammenwirkt, welches im Bereich der radialen Außenseite des Riemens als Decklage in dessen flexiblen Material eingebettet ist. Hinsichtlich der erwähnten Tasche ist bevorzugt vorgesehen, dass diese eine verschließbare Öffnung aufweist, welche vorzugsweise mittels eines Deckels verschließbar ist. Die Öffnung und der Deckel sind so bemessen, dass im geöffneten Zustand der Tasche die Elektronik beziehungsweise der Elektronikträger mit samt der daran angeordneten Elektronikkomponenten durch die Öffnung in die Tasche einführbar ist, und die Öffnung im geschlossenen Zustand flüssigkeitsdicht verschlossen ist. Der Deckel kann als ein separates Bauteil ausgebildet sein, jedoch wird ein laschenförmiger Deckel als vorteilhafter beurteilt, welcher mit einem Abschnitt fest mit dem Hauptkörper der Tasche verbunden ist.

Die Tasche kann aber auch eine Raumform ähnlich eines Briefumschlages beziehungsweise eines sehr flachen Quaders aufweisen.

Im einfachsten Fall ist die Tasche als Kappe ausgebildet, deren offene Seite zu dem Riemen weist, und die einen Schlitz hat, durch den die Elektronik beziehungsweise der Elektronikträger mit samt den daran angeordneten Elektronikkomponenten in die Tasche einschiebbar ist. Bei der Ausbildung der Tasche als einfache Kappe wird die Elektronik beziehungsweise der Elektronikträger beziehungsweise ein Sensor direkt auf die radiale Außenseite des Riemens vergleichsweise lose befestigt.

Die Tasche besteht vorzugsweise vollständig aus einem flexiblen und dabei beispielsweise elastomeren Material. Sie kann aber auch unter Verwendung eines Gewebes hergestellt sein. Die Tasche kann aber auch aus einer Kombination dieser Werkstoffe hergestellt sein, also aus einem flexiblen Material und einem Gewebe. In jedem Fall ist vorgesehen, dass Tasche flüssigkeitsdicht ist. Daher wird die Öffnung der Tasche nach dem Einführen der Elektronik beziehungsweise des Elektronikträgers vernäht und/oder verklebt.

Weiter wird es als besonders vorteilhaft beurteilt, wenn vorgesehen ist, dass die Tasche zumindest in Längsrichtung des Riemens dehnfähig ausgebildet ist. Dies kann durch eine dementsprechende Ausrichtung einer nur einseitig dehnfähigen Tasche realisiert sein.

Die Elektronik beziehungsweise der sie tragende Elektronikträger oder zumindest der Sensor sind innerhalb der Tasche auf der radialen Außenseite des Riemens bevorzugt nahe einer seitlichen Flanke des Riemens angeordnet. Dies ist besonders deshalb günstig, weil dort die größte mechanische Beanspruchung des Riemens bei dessen Eingriff in eine Riementriebscheibe oder zwischen zwei gegeneinander axial verstellbare Scheiben eines Variators zu erwarten ist.

Der wenigstens eine Sensor ist beispielsweise ein Temperatursensor, mit dessen Hilfe der Wärmeeintrag in den Riemen beziehungsweise dessen aktuelle Temperatur während dessen Betrieb ermittelbar ist. Es ist bekannt, dass gerade die Betriebstemperatur eines Riemens eine entscheidende Größe für die Beurteilung der schadlosen Gebrauchsdauer eines Tragriemens, Förderriemes oder Antriebsriemens ist.

Der die elektronischen Bauelemente und den Sensor tragende oder mit diesem verbundene Elektronikträger kann aus einer sehr dünnen und in Umfangsrichtung des Riemens gesehen sehr kurzen Platine oder aus einer flexiblen Folie bestehen, wobei letztere Ausführungsform auch als sogenannte Folienelektronik bekannt ist.

Weiter kann vorgesehen sein, dass an dem Elektronikträger wenigstens ein digitaler Schaltkreis, ein analoger Schaltkreis, ein Sensor, ein Empfänger zum Empfangen von elektromagnetischen Wellen und ein Sender zum Beeinflussen oder Senden von elektromagnetischen Wellen angeordnet ist, die signaltechnisch miteinander verbunden sind.

Es kann dabei auch vorgesehen sein, dass der Elektronikträger einen RFID-Transponder trägt oder als ein solcher ausgebildet ist, welcher mit einem Temperatursensor signaltechnisch in Kontakt ist, mittels dem sich die Temperatur des Materials der Tasche und daraus die Temperatur des Riemenmaterials am gewählten Messort bestimmen lässt.

Der gemäß der Erfindung ausgebildete Riemen kann als ein ringförmiger oder spiralförmiger Endlosriemen, als ein Transportband, als ein Tragband oder als sogenannte Meterware ausgebildet sein. Riemen in Form von sogenannter Meterware sind in deren Längsrichtung vergleichsweise kurz und weisen jeweils zwei freie Enden auf.

Ferner kann auch ein elastomerer Balg einer Luftfeder an dessen radialen Außenseite mit der beschriebenen Tasche verbunden sein, in deren Innenraum eine Elektronik oder ein Elektronikträger samt Elektronikkomponenten vergleichsweise lose, jedoch verschiebungsfest befestigt ist. Diese Elektronik dient zur Messung wenigstens einer Zustandsgröße des Balgs sowie zur drahtlosen Übertragung der Messwerte an eine entfernte Empfangseinheit.

Die Erfindung wird nachfolgend anhand von Ausführungsbeispielen weiter erläutert, welche in der beigefügten Zeichnung dargestellt sind. Hierin zeigt
- Fig. 1: eine geschnittene Seitenansicht eines einseitig gezahnten Antriebsriemens, an dessen radialer Außenseite eine Tasche befestigt ist, in der eine Elektronik angeordnet ist,
- Fig. 2: einen schematischen Querschnitt durch den Riemen und die Tasche gemäß Fig. 1,
- Fig. 3: einen schematischen Querschnitt durch den Riemen gemäß Fig. 1 und durch die Tasche, in welcher zwei Elektronikträger seitenflankennah angeordnet sind, und
- Fig. 4: eine schematische Draufsicht auf die radiale Außenseite eines Riemens ähnlich wie der in Fig. 1, in dessen Tasche insgesamt drei Elektronikträger samt Elektronikkomponenten angeordnet sind, welche jeweils unterschiedlich am Boden der Tasche befestigt sind.

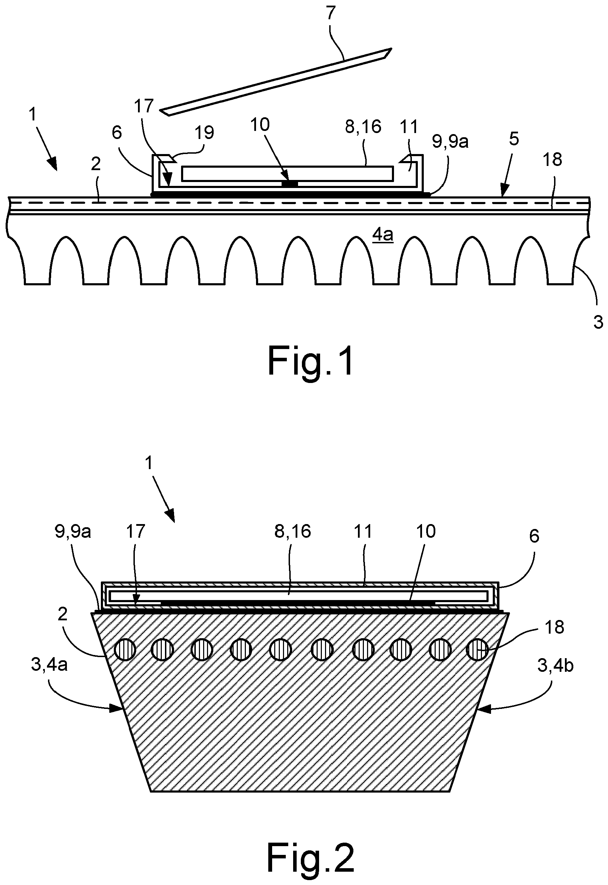

Der in den Figuren 1 bis 4 dargestellte Riemen 1 ist ein endloser Antriebsriemen, welcher aus einem flexiblen Material besteht und einen an sich konventionellen Aufbau aufweist. Das flexible Material soll bei diesem Beispiel ein Gummi sein. Der Riemen 1 weist an seiner radialen Innenseite Zähne 3 sowie geneigte seitliche Flanken 4a, 4b auf, welche dem Riemen eine weitgehend V-förmige Querschnittgeometrie verleihen. Radial außen und oberflächennah ist in das elastomere Material des Riemens 1 ein Gewebe 2 eingebettet. Zwischen diesem Gewebe 2 und den Zahnfüßen der Zähne 3 ist in dem flexiblen Material des Riemens außerdem ein gewickelter Cord 18 als Zugträger einvulkanisiert.

Gemäß der Erfindung ist der Riemen 1 an seiner radialen Außenseite mit einer Tasche 6 fest verbunden, in der eine Elektronik 16 angeordnet ist. Die Verbindung der Tasche 6 mit der radialen Außenseite 5 des Riemens 1 ist mittels eines Klebstoffs 9 oder mittels einer Kaltvulkanisation in einem Vulkanisationsbereich 9a realisiert und erfolgte erst nach der vollständigen Herstellung des Riemens 1.

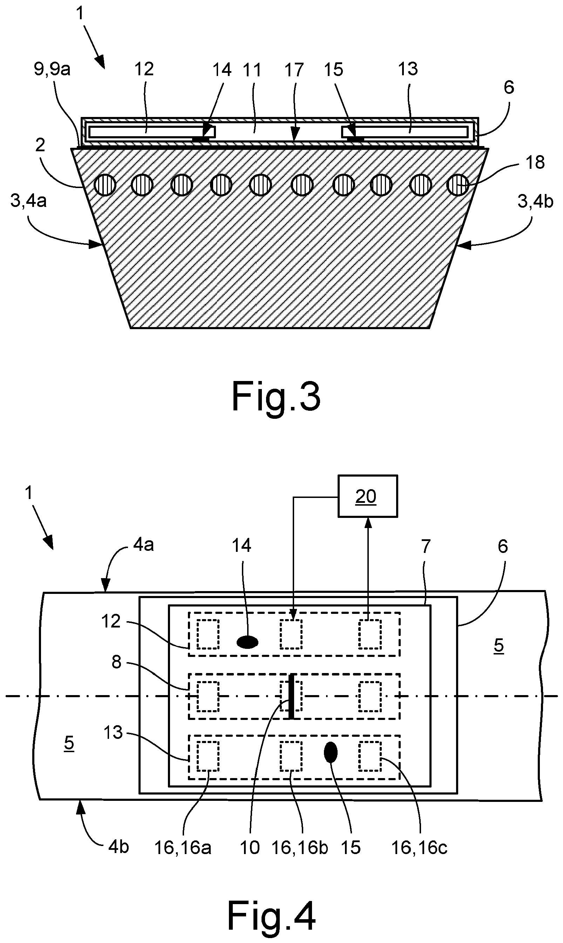

Die erwähnte Elektronik 16 kann separat in der Tasche 6 angeordnet sein, oder sie kann wie dargestellt auf einen Elektronikträger 8, 12, 13 angeordnet sein, welcher in der Tasche 6 vergleichsweise lose befestigt ist. Der Elektronikträger 8, 12, 13 kann aus einer sehr dünnen und flexiblen Folie bestehen, auf der Elektronikkomponenten aufgedruckt oder in anderer Weise ausgebildet oder angeordnet sind. Der Elektronikträger 8, 12, 13 kann aber auch aus einer in Umfangsrichtung des Riemens 1 sehr kurzen und dünnen Platine bestehen, welche die Elektronikkomponenten trägt. Wie Fig. 4 veranschaulicht, umfassen diese Elektronikkomponenten beispielsweise einen Sensor 16a, einen Empfänger 16b zum Empfangen elektromagnetischer Wellen, einen Sender 16c zum Senden oder zum Beeinflussen von elektromagnetischen Wellen, sowie nicht dargestellte analoge und digitale Schaltkreise. Die Elektronikkomponenten 16a, 169b, 16c sind in geeigneter Weise, beispielsweise über dünne Leiterbahnen, signaltechnisch mit den genannten Schaltkreisen verbunden. Der Empfänger 16b und der Sender 16c stehen mit einer Sende- und Empfangseinheit 20 drahtlos in Verbindung, welche entfernt von dem Riemen 1 und damit entfernt von dem riemenseitigen Empfänger 16b und Sender 16c angeordnet ist.

Wie Fig. 1 veranschaulicht, weist die Tasche 6 einen etwa kastenförmigen Hauptkörper mit vergleichsweise geringer Höhe auf. Die Tasche 6 weist zudem radial außen eine Öffnung 19 auf, die mittels eines Deckels 7 flüssigkeitsdicht verschließbar ist. In dem Innenraum 11 der Tasche 6 ist ein Elektronikträger 8 angeordnet, welcher mit der genannten Elektronik 16, 16a, 16b, 16c bestückt ist.

Der Elektronikträger 8 oder ganz allgemein die Elektronik 16 ist grundsätzlich derartig mit dem riemennahen Boden 17 der Tasche 6 verbunden, dass die Elektronik 16 deren Befestigungsort in der Tasche 6 weder verlassen kann, also etwa verrutscht, noch durch elastische Geometrieänderungen des Riemens 1 während dessen Betrieb selbst zu Lage- oder Geometrieänderungen gezwungen wird. Anders ausgedrückt ist durch die Art der Anordnung und Befestigung der Elektronik 16 in der Tasche 6 gewährleistet, dass betriebsbedingte Geometrieänderungen des Riemens 1 weder dazu führen, dass die Verbindung der Elektronik 16 mit dem Boden 17 der Tasche 6 unterbrochen wird, noch dass die Elektronik 16 beschädigt wird.

Da die Elektronik 16 nach der vollständigen Fertigstellung des Riemens 1 an diesem angeordnet wird, können auch die bei der Herstellung des Riemens 1 auftretenden hohen Temperaturen von bis zu 180°C sowie auch keine herstellungsbedingten Verformungskräfte auf die Elektronik 16 einwirken. Hierdurch ist insgesamt sichergestellt, dass die Elektronik 16 weder bei der Herstellung des Riemens 1 noch während des Betriebs desselben beschädigt wird oder deren vorgesehene Position am Riemen 1 verlässt.

Die Verbindung der Elektronik 16 beziehungsweise des Elektronikträger 8, 12, 13 mit dem Boden 17 der Tasche 6 ist bei in den Figuren 1, 2 und 4 gezeigten Ausführungsbeispielen mittels eines linienförmigen Streifens eines Verbindungsmittels 10 realisiert. Das Verbindungsmittel 10 ist beispielsweise ein geeigneter elastischer Klebstoff. Wie insbesondere Fig. 1 erkennen lässt, ist das Verbindungsmittel 10 in Umfangsrichtung des Riemens 1 gesehen mittig an der riemenseitigen Unterseite des Elektronikträgers 8 angeordnet, so dass dieser mit seinen in Umfangsrichtung weisenden Abschnitten ohne Verbindungskontakt zu dem Boden 17 der Tasche 1 angeordnet ist. Durch das Verbindungsmittel 10 und dessen Anordnung ist der Elektronikträger 8 dennoch fest und unverrückbar mit dem Boden 17 der Tasche 6 verbunden. Längungen oder Stauchungen des Riemens 1 in Umfangsrichtung, die während des Betriebes des Riemens 1 entstehen, bleiben daher ohne Auswirkungen auf den Elektronikträger 8 und auf die Elektronik 16 beziehungsweise auf dessen Komponenten 16a, 16b, 16c. Anstelle einer linienförmigen Anordnung des Verbindungsmittels 10 kann dieses auch punktförmig beziehungsweise fleckförmig zwischen dem Elektronikträger 8 und dem Boden 18 der Tasche angeordnet sein.

Wie das Ausführungsbeispiel gemäß Fig. 3 veranschaulicht, können an dem Riemen 1 im Innenraum 11 der Tasche 6 auch zwei oder mehrere Elektronikträger 12, 13 angeordnet sein, welche jeweils eine Elektronik 16 tragen. Mittels der jeweiligen Elektronik 16 können beispielsweise während seines Betriebs des Riemens 1 flankennahe Zustandsgrößen des Riemens 1 beidseitig gemessen und an eine entfernt angeordnete Empfangseinrichtung 20 gesendet werden. Die beiden Elektronikträger 12, 13 sind in dem Ausführungsbeispiel gemäß Fig. 3 dazu in der einzigen Tasche 6 außermittig und damit flankennah an dem Riemen 1 angeordnet. Dies ist besonders deshalb sinnvoll, weil die beiden Flanken 4a, 4b des Riemens 1 im Betrieb desselben in Antriebskontakt mit den Seitenscheiben einer Riemenscheibe oder eines Variators in Kontakt sind. Durch die flankennahe Anordnung der Elektronikträger 12, 13 und der daran angeordneten Elektronik 16 beziehungsweise deren Komponenten 16a, 16b, 16c lassen sich daher beispielsweise die Temperaturen der Riemenflanken 4a, 4b sehr viel genauer ermitteln als bei einer eher mittigen Anordnung der Elektronik 16 beziehungsweise des zugehörigen Sensors 16a am Riemen 1.

Fig. 3 zeigt auch, dass das Verbindungsmittel 14, 15, mittels welchem die beiden Elektronikträger 12, 13 jeweils am Boden 17 der einzigen Tasche 6 befestigt sind, außermittig an den jeweiligen Elektronikträgern 12, 13 angeordnet sind. Die Anordnung des Verbindungsmittels 14, 15 ist dabei jeweils derartig, dass dieses möglichst weit entfernt von den Flanken 4a, 4b des Riemens 1 angeordnet ist, in dessen Folge die flankenseitigen Abschnitte der Elektronikträger 12, 13 vergleichsweise beweglich in dem Aufnahmeraum 11 der Tasche angeordnet sind.

An dieser Stelle sei darauf hingewiesen, dass der in den Figuren 1 bis 3 erkennbare Abstand zwischen dem Boden 17 beziehungsweise dem Deckel 7 der Tasche 6 und dem jeweiligen Elektronikträger 8, 12, 13 oder der Elektronik 16 lediglich zur besseren Erkennbarkeit der Einzelkomponenten überhöht dargestellt ist. In der Realität wird der jeweilige Elektronikträger 8, 12, 13 beziehungsweise die jeweilige Elektronik 16 derart in die Tasche 6 angeordnet sein, dass diese in Kontakt mit dem Boden 17 und dem Deckel 7 der Tasche 6 sind.

Schließlich zeigt Fig. 4 eine radiale Draufsicht auf einen erfindungsgemäß bestückten Riemen 1, in dessen einziger Tasche 6 insgesamt drei Elektronikträger 8, 12, 13 angeordnet sind. Dabei ist der erste Elektronikträger 8 mittig zwischen den beiden Flanken 4a, 4b des Riemens 1 angeordnet, und das Verbindungsmittel 10 ist quer zur Umfangserstreckung des Riemens 1 linienförmig sowie mittig zwischen dem Boden 17 der Tasche 6 und der riemenseitigen Unterseite des Elektronikträgers 8 angeordnet. Der zweite Elektronikträger 12 und der dritte Elektronikträger 13 sind nahe an jeweils einer der Flanken 4a, 4b des Riemens 1 angeordnet. Diese Elektronikträger 12, 13 sind ebenfalls rechteckig ausgebildet und erstrecken sich mit deren langen Seiten in Umfangserstreckung des Riemens 1. Bei diesen zweiten und dritten Elektronikträgern 12, 13 ist das Verbindungsmittel 14, 15 flankenfern sowie außermittig in Bezug zu auf die kurzen Seiten der Elektronikträger 12, 13 zwischen dem Boden 17 der Tasche 6 sowie der riemenseitigen Unterseite der Elektronikträger 12, 13 angeordnet. Das Verbindungsmittel 14, 15 weist dabei eine punktförmige oder fleckförmige Geometrie auf. Bei allen drei Elektronikträgern 8, 12, 13 sind in dieser Ansicht die daran angeordneten Elektronikkomponenten erkennbar, welche aus einem Temperatursensor 16a, einem Empfänger 16b und einem Sender 16c bestehen.

### Bezugszeichenliste

### (Teil der Beschreibung)

- 1: Riemen
- 2: Gewebe, Decklage des Riemens
- 3: Zahn des Riemens
- 4a: Erste seitliche Flanke des Riemens
- 4b: Zweite seitliche Flanke des Riemens
- 5: Radiale Außenseite des Riemens
- 6: Tasche
- 7: Deckel der Tasche
- 8: Elektronikträger, in mittiger Anordnung am Riemen
- 9: Klebstoff
- 9a: Vulkanisationsbereich
- 10: Verbindungsmittel in mittiger Anordnung am Elektronikträger
- 11: Aufnahmeraum der Tasche
- 12: Elektronikträger, in erster seitlicher Anordnung am Riemen
- 13: Elektronikträger, in zweiter seitlicher Anordnung am Riemen
- 14: Verbindungsmittel in erster flankenferner Anordnung am Elektronikträger
- 15: Verbindungsmittel in zweiter flankenferner Anordnung am Elektronikträger
- 16: Elektronik
- 16a: Sensor am Elektronikträger, Elektronik
- 16b: Empfänger am Elektronikträger, Elektronik
- 16c: Sender am Elektronikträger, Elektronik
- 17: Boden der Tasche
- 18: Cord, Zugträger
- 19: Öffnung in der Tasche
- 20: Sende- und Empfangseinheit, Empfangseinheit

## Patentansprüche

1. Riemen (1) aus einem flexiblen Material, an dem eine Elektronik (16) angeordnet ist, mittels welcher wenigstens eine Zustandsgröße des Riemens (1) messbar sowie drahtlos an eine entfernt angeordnete Empfangseinheit (20) weiterleitbar ist, **dadurch gekennzeichnet, dass** an der radialen Außenseite (5) des Riemens (1) eine nach der vollständigen Herstellung des Riemens befestigte Tasche (6) vorgesehen ist, und dass die Elektronik (16) in einem Aufnahmeraum (11) dieser Tasche (6) angeordnet ist.

2. Riemen nach Anspruch 1, **dadurch gekennzeichnet, dass** die Elektronik (16) auf einem Elektronikträger (8, 12, 13) angeordnet ist, welcher mit dem riemenseitigen Boden (17) der Tasche (6) vergleichsweise lose, jedoch verschiebefest verbunden ist.

3. Riemen nach Anspruch 2, **dadurch gekennzeichnet, dass** der Elektronikträger (8, 12, 13) mit dem Boden (17) der Tasche (6) derartig verbunden ist, dass der Elektronikträger (8, 12, 13) bei einer elastischen Geometrieänderung des Riemens (1) und/oder der Tasche (6) seine Abmessungen unverändert beibehält.

4. Riemen nach Anspruch 2 oder 3, **dadurch gekennzeichnet, dass** der Elektronikträger (8, 12, 13) über eine linienartige, fleckförmige oder punktförmige Verbindung mit dem Boden (17) der Tasche (6) verbunden ist.

5. Riemen nach Anspruch 4, **dadurch gekennzeichnet, dass** der Elektronikträger (8, 12, 13) über eine linienartige, fleckförmige oder punktförmige Verklebung mit dem Boden der Tasche (6) verbunden ist.

6. Riemen nach einem der Ansprüche 1 bis 5, **dadurch gekennzeichnet, dass** die Riemenseite der Tasche (6) und die radiale Außenseite (5) des Riemens (1) mittels eines Klebstoffs (9) miteinander verbunden sind.

7. Riemen nach einem der Ansprüche 1 bis 5, **dadurch gekennzeichnet, dass** die Riemenseite der Tasche (6) und die radiale Außenseite (5) des Riemens (1) in einem Vulkanisationsbereich (9a) mittels einer Kaltvulkanisation miteinander verbunden sind.

8. Riemen nach einem der Ansprüche 1 bis 7, **dadurch gekennzeichnet, dass** die Tasche (6) eine verschließbare Öffnung (19) aufweist, welche mittels eines Deckels (7) verschließbar ist, wobei die Öffnung (19) und der Deckel (7) der Tasche (6) so bemessen sind, dass im geöffneten Zustand der Tasche (6) die Elektronik (16) oder der Elektronikträger (8, 12, 13) samt der daran angeordneten Elektronikkomponenten durch die Öffnung (19) in die Tasche (6) einführbar ist und im geschlossenen Zustand die Öffnung (19) flüssigkeitsdicht verschlossen ist.

9. Riemen nach einem der Ansprüche 1 bis 8, **dadurch gekennzeichnet, dass** die Tasche (6) als Kappe ausgebildet, deren offene Seite zu dem Riemen (1) weist, und die einen Schlitz hat, durch den die Elektronik beziehungsweise der Elektronikträger (8, 12, 13) in die Tasche (6) einschiebbar ist.

10. Riemen nach einem der vorherigen Ansprüche, **dadurch gekennzeichnet, dass** die Tasche (6) aus einem flexiblen Material hergestellt ist.

11. Riemen nach Anspruch 10, **dadurch gekennzeichnet, dass** die Tasche (6) mit einem flexiblen Material und einem Gewebe hergestellt ist.

12. Riemen nach Anspruch 10 oder 11, **dadurch gekennzeichnet, dass** die Tasche (6) zumindest in Längsrichtung des Riemens (1) dehnfähig ausgebildet ist.

13. Riemen nach einem der Ansprüche 1 bis 12, **dadurch gekennzeichnet, dass** die Elektronik (16) beziehungsweise der sie tragende Elektronikträger (8, 12, 13) innerhalb der Tasche (6) auf der radialen Außenseite (5) des Riemens (1) nahe einer seitlichen Flanke (4a; 4b) des Riemens (1) angeordnet ist.

14. Riemen nach Anspruch 12, **dadurch gekennzeichnet, dass** ein Sensor (16a) der Elektronik (16) innerhalb der Tasche (6) auf der radialen Außenseite (5) des Riemens (1) nahe einer seitlichen Flanke (4a; 4b) des Riemens (1) angeordnet ist.

15. Riemen nach einem der Ansprüche 2 bis 14, **dadurch gekennzeichnet, dass** der Elektronikträger (8, 12, 13) aus einer sehr dünnen und in Umfangsrichtung des Riemens (1) sehr kurzen Platine oder aus einer flexiblen Folie besteht.

16. Riemen nach einem der Ansprüche 2 bis 15, **dadurch gekennzeichnet, dass** an dem Elektronikträger (8, 12, 13) wenigstens ein digitaler Schaltkreis, ein analoger Schaltkreis, ein Sensor (16a), ein Empfänger (16a) zum Empfangen von elektromagnetischen Wellen und ein Sender (16c) zum Beeinflussen oder Senden von elektromagnetischen Wellen angeordnet ist, die signaltechnisch miteinander verbunden sind.

17. Riemen nach Anspruch 16, **dadurch gekennzeichnet, dass** der Sensor (16a) als Temperatursensor ausgebildet ist.

18. Riemen nach einem der Ansprüche 1 bis 17, **dadurch gekennzeichnet, dass** dieser als ringförmiger oder spiraliger Endlosriemen, als Transportband, als Tragband oder als Meterware ausgebildet ist.

## Claims

1. Belt (1) made of a flexible material, arranged on which are electronics (16), by means of which at least one state variable of the belt (1) can be measured and can be passed on wirelessly to a remote receiving unit (20), **characterized in that** provided on the radial outer side (5) of the belt (1) is a pocket (6) that is fastened after production of the belt is completed, and **in that** the electronics (16) are arranged in a receiving space (11) of this pocket (6) .

2. Belt according to Claim 1, **characterized in that** the electronics (16) are arranged on an electronics carrier (8, 12, 13), which is connected to the bottom (17) of the pocket (6) on the belt side in a comparatively loose, but non-displaceable manner.

3. Belt according to Claim 2, **characterized in that** the electronics carrier (8, 12, 13) is connected to the bottom (17) of the pocket (6) in such a way that the electronics carrier (8, 12, 13) retains its dimensions unchanged when there is an elastic change in the geometry of the belt (1) and/or of the pocket (6) .

4. Belt according to Claim 2 or 3, **characterized in that** the electronics carrier (8, 12, 13) is connected to the bottom (17) of the pocket (6) by means of a linear, spot-like or point-like connection.

5. Belt according to Claim 4, **characterized in that** the electronics carrier (8, 12, 13) is connected to the bottom of the pocket (6) by means of a linear, spot-like or point-like adhesive bond.

6. Belt according to one of Claims 1 to 5, **characterized in that** the belt side of the pocket (6) and the radial outer side (5) of the belt (1) are connected to one another by means of an adhesive (9).

7. Belt according to one of Claims 1 to 5, **characterized in that** the belt side of the pocket (6) and the radial outer side (5) of the belt (1) are connected to one in a vulcanization region (9a) by means of a cold vulcanization.

8. Belt according to one of Claims 1 to 7, **characterized in that** the pocket (6) has a closable opening (19), which can be closed by means of a cover (7), wherein the opening (19) and the cover (7) of the pocket (6) are dimensioned in such a way that, in the open state of the pocket (6), the electronics (16) or the electronics carrier (8, 12, 13) together with the electronic components arranged on it can be inserted through the opening (19) into the pocket (6) and in the closed state the opening (19) is closed in a liquid-tight manner.

9. Belt according to one of Claims 1 to 8, **characterized in that** the pocket (6) is formed as a cap, the open side of which faces the belt (1), and which has a slit through which the electronics or the electronics carrier (8, 12, 13) can be pushed into the pocket (6) .

10. Belt according to one of the preceding claims, **characterized in that** the pocket (6) is produced from a flexible material.

11. Belt according to Claim 10, **characterized in that** the pocket (6) is produced with a flexible material and a woven fabric.

12. Belt according to Claim 10 or 11, **characterized in that** the pocket (6) is formed as stretchable, at least in the longitudinal direction of the belt (1).

13. Belt according to one of Claims 1 to 12, **characterized in that** the electronics (16) or the electronics carrier (8, 12, 13) carrying the electronics is/are arranged within the pocket (6) on the radial outer side (5) of the belt (1) near a lateral flank (4a; 4b) of the belt (1).

14. Belt according to Claim 12, **characterized in that** a sensor (16a) of the electronics (16) is arranged within the pocket (6) on the radial outer side (5) of the belt (1) near a lateral flank (4a; 4b) of the belt (1).

15. Belt according to one of Claims 2 to 14, **characterized in that** the electronics carrier (8, 12, 13) consists of a circuit board that is very thin and very short in the circumferential direction of the belt (1) or of a flexible film.

16. Belt according to one of Claims 2 to 15, **characterized in that** arranged on the electronics carrier (8, 12, 13) is at least one digital circuit, an analogue circuit, a sensor (16a), a receiver (16a) for receiving electromagnetic waves and a transmitter (16c) for influencing or transmitting electromagnetic waves, which are connected to one another for signalling purposes.

17. Belt according to Claim 16, **characterized in that** the sensor (16a) is formed as a temperature sensor.

18. Belt according to one of Claims 1 to 17, **characterized in that** it is formed as an annular or spiral endless belt, as a transporting belt, as a carrying belt or as material supplied by the metre.

## Revendications

1. Courroie (1) en un matériau flexible, sur laquelle une électronique (16) est agencée, au moyen de laquelle au moins une grandeur d'état de la courroie (1) peut être mesurée et transmise sans fil à une unité de réception agencée à distance (20), **caractérisée en ce qu'**une poche (6) fixée après la fabrication complète de la courroie est prévue sur le côté extérieur radial (5) de la courroie (1), et **en ce que** l'électronique (16) est agencée dans un espace de logement (11) de cette poche (6).

2. Courroie selon la revendication 1, **caractérisée en ce que** l'électronique (16) est agencée sur un support d'électronique (8, 12, 13), qui est relié de manière relativement lâche, mais toutefois sans possibilité de translation, avec le fond côté courroie (17) de la poche (6).

3. Courroie selon la revendication 2, **caractérisée en ce que** le support d'électronique (8, 12, 13) est relié avec le fond (17) de la poche (6) de telle sorte que le support d'électronique (8, 12, 13) conserve ses dimensions inchangées lors d'un changement géométrique élastique de la courroie (1) et/ou de la poche (6).

4. Courroie selon la revendication 2 ou 3, **caractérisée en ce que** le support d'électronique (8, 12, 13) est relié avec le fond (17) de la poche (6) par l'intermédiaire d'une liaison en forme de ligne, en forme de tache ou en forme de point.

5. Courroie selon la revendication 4, **caractérisée en ce que** le support d'électronique (8, 12, 13) est relié avec le fond de la poche (6) par l'intermédiaire d'un collage en forme de ligne, en forme de tache ou en forme de point.

6. Courroie selon l'une quelconque des revendications 1 à 5, **caractérisée en ce que** le côté courroie de la poche (6) et le côté extérieur radial (5) de la courroie (1) sont reliés l'un avec l'autre au moyen d'un adhésif (9).

7. Courroie selon l'une quelconque des revendications 1 à 5, **caractérisée en ce que** le côté courroie de la poche (6) et le côté extérieur radial (5) de la courroie (1) sont reliés l'un avec l'autre dans une zone de vulcanisation (9a) au moyen d'une vulcanisation à froid.

8. Courroie selon l'une quelconque des revendications 1 à 7, **caractérisée en ce que** la poche (6) comprend une ouverture (19) pouvant être fermée, qui peut être fermée au moyen d'un couvercle (7), l'ouverture (19) et le couvercle (7) de la poche (6) étant dimensionnés de telle sorte que, dans l'état ouvert de la poche (6), l'électronique (16) ou le support d'électronique (8, 12, 13), y compris les composants électroniques agencés sur celui-ci, puisse être introduit à travers l'ouverture (19) dans la poche (6) et que, dans l'état fermé, l'ouverture (19) soit fermée de manière étanche aux liquides.

9. Courroie selon l'une quelconque des revendications 1 à 8, **caractérisée en ce que** la poche (6) est configurée sous la forme d'un capot, dont le côté ouvert est orienté vers la courroie (1), et qui a une fente, à travers laquelle l'électronique ou le support d'électronique (8, 12, 13) peut être inséré dans la poche (6).

10. Courroie selon l'une quelconque des revendications précédentes, **caractérisée en ce que** la poche (6) est fabriquée en un matériau flexible.

11. Courroie selon la revendication 10, **caractérisée en ce que** la poche (6) est fabriquée avec un matériau flexible et un tissu.

12. Courroie selon la revendication 10 ou 11, **caractérisée en ce que** la poche (6) est configurée sous forme extensible au moins dans la direction longitudinale de la courroie (1).

13. Courroie selon l'une quelconque des revendications 1 à 12, **caractérisée en ce que** l'électronique (16) ou le support d'électronique (8, 12, 13) la supportant est agencé à l'intérieur de la poche (6) sur le côté extérieur radial (5) de la courroie (1) à proximité d'un flanc latéral (4a ; 4b) de la courroie (1).

14. Courroie selon la revendication 12, **caractérisée en ce qu'**un capteur (16a) de l'électronique (16) est agencé à l'intérieur de la poche (6) sur le côté extérieur radial (5) de la courroie (1) à proximité d'un flanc latéral (4a ; 4b) de la courroie (1).

15. Courroie selon l'une quelconque des revendications 2 à 14, **caractérisée en ce que** le support d'électronique (8, 12, 13) est constitué d'une platine très mince et très courte dans la direction circonférentielle de la courroie (1) ou d'une feuille flexible.

16. Courroie selon l'une quelconque des revendications 2 à 15, **caractérisée en ce qu'**au moins un circuit numérique, un circuit analogue, un capteur (16a), un receveur (16a) pour recevoir des ondes électromagnétiques et un émetteur (16c) pour influencer ou émettre des ondes électromagnétiques est agencé sur le support d'électronique (8, 12, 13), qui sont reliés par signalétique l'un avec l'autre.

17. Courroie selon la revendication 16, **caractérisée en ce que** le capteur (16a) est configuré sous la forme d'un capteur de température.

18. Courroie selon l'une quelconque des revendications 1 à 17, **caractérisée en ce que** celle-ci est configurée sous la forme d'une courroie sans fin annulaire ou en spirale, sous la forme d'une bande de transport, sous la forme d'une bande porteuse ou sous la forme d'une marchandise au mètre.
